# EUROPEAN PATENT SPECIFICATION

(11) **EP 0 849 316 B1**
(45) Date of publication and mention of the grant of the patent: **17.10.2001**
(21) Application number: 97310198.3
(22) Date of filing: 16.12.1997
(51) Int. Cl.: C08K 5/103, C08L 21/00

(54) **Rubber composition improved in processability**
Gummimischung mit verbesserter Verarbeitbarkeit
Composition de caoutchouc ayant une usinabilité améliorée

(30) Priority: 17.12.1996 JP 33720696
(43) Date of publication of application: 24.06.1998
(73) Proprietor: Bridgestone Corporation, Tokyo (JP)
(72) Inventor: Ootsuka, Yasushiro, Kodaira-shi, Tokyo (JP); Hatakeyama, Kazuya, Kodaira-shi, Tokyo (JP)
(74) Representative: Whalley, Kevin

(56) References cited:
- CHEMICAL ABSTRACTS, vol. 109, no. 10, 5 September 1988 Columbus, Ohio, US; abstract no. 74983, XP002059299 & JP 62 253 643 A (KAO CORP) 5 November 1987

## Description

The present invention relates to a rubber composition which has markedly improved processability in a nonvulcanized state and provides good low heat generating property without reducing mechanical properties after vulcanization and which has good adhesion to steel with vulcanization and generates very little bleed.

In recent rubber compositions for tires, processing of non-vulcanized rubber has become notably difficult in compensation for satisfying desired performances extending over a wide range.

In general, it is known to blend rubber with process oil for the purpose of providing diene base rubber with plasticity to improve the processability.

However, this method has the problem that while the processability of non-vulcanized rubber can be improved, the physical properties of vulcanized rubber such as mechanical properties and heat generating property are deteriorated.

Further, rubber compositions blended with fatty acids or various metal salts of fatty acids as processing aids are known as well (Japanese Patent Application Laid-Open No. Sho 61-130357, Japanese Patent Application Laid-Open No. Sho 62-64842 and Japanese Patent Application Laid-Open No. Sho 59-113044). While they can be expected to improve the processability, the durability of adhesion between a steel cord and vulcanized rubber is reduced in the use of a tire, and therefore they can not be used around steel cords and are limited in use.

Furthermore, used as processing aids are various esters, for example pentaerythritol tetrastearate (Japanese Patent Application Laid-Open No. Hei 1-115943), monoglycerides, rice bran wax and paraffin wax. While they can be expected to improve the processability, they have the problem of bleed of vulcanized rubber.

Esters of polymer acids or alkenylsuccinic acids with higher alcohols or polyhydric alcohols are disclosed as ester base processing aids solving this problem in Japanese Patent Application Laid-Open No. Sho 62-72733.

A processing aid which is a mixture of a fatty acid and a full ester of an aliphatic alcohol having a melting point of 10°C or lower with an organic acid are disclosed in Japanese Patent Application Laid-Open No. Sho 57-168998. They also have the problem of a reduction in the durability of adhesion between steel and vulcanized rubber. In addition, nothing is described about the effect of adding singly each component contained in the processing aid to rubber compositions.

Esters of unsaturated fatty acids with saturated and unsaturated alcohols or glycols are disclosed in Japanese Patent Application Laid-Open No. Sho 59-122532. They are low temperature resistance-improving agents and can enhance the flexibility of rubber but have inferior heat generating property, strength and adhesion to steel cord.

As described above, known rubber compositions having improved processability have the defects that they are unsatisfactory to a large extent in respect of their physical properties such as mechanical properties and heat generating property and adhesion to steel with vulcanization, and therefore improved rubber compositions are desired.

The present invention is intended for solving these problems, and an object thereof is to provide a rubber composition which has markedly improved processability in a non-vulcanized state and provides good low heat generating property without reducing mechanical properties after vulcanization and which does not have reduced adhesion to steel with vulcanization and generates very little bleed (deposition of compounded chemicals on the surface of rubber). Another object is to provide a rubber composition which is easy to process while satisfying the performances required by tires.

Intensive investigations made by the present inventors concerning the problems of the conventional techniques described above have resulted in finding that a rubber composition blended with a specific ester has markedly improved processability in a non-vulcanized state and provides an improved low heat generating property without reducing mechanical properties after vulcanization and that it does not have reduced adhesion to steel with vulcanization and generates very little bleed, and thus the present invention has been accomplished.

The present invention provides a rubber composition improved in processability comprising the following components (A) to (C):

| | | |
|---|---|---|
| (A) | at least one vulcanizable rubber | 100 parts by weight |
| (B) | a reinforcing agent | 20 to 120 parts by weight |
| (C) | a diester comprising | 1 to 10 parts by weight |

ethylene glycol and oleic acid, linoleic acid or stearic acid.

Preferably, the vulcanizable rubber (A) comprises 50 parts by weight or more of natural rubber; the reinforcing agent (B) comprises 50 parts by weight or more of carbon black; and the rubber composition further comprises 10 parts by weight or less of a process oil.

Embodiments of the present invention shall be explained below in detail.

The vulcanizable rubber used in the present invention is not specifically restricted and, for example, natural rubber, styrene-butadiene copolymerized rubber, butadiene rubber and isoprene rubber can be used alone or in combination.

The reinforcing agent used in the present invention is not specifically restricted, and products usually used for rubber are used and include, for example, carbon blacks such as HAF, ISAF and SAF and white fillers such as silica.

The blend amount of the reinforcing agent is 20 to 120 parts by weight per 100 parts by weight of the vulcanizable rubber described above, and suitable amounts are determined depending on the uses of the rubber composition.

The diesters used in the present invention comprising ethylene glycol and oleic, linoleic or stearic acid include, for example, ethylene glycol dioleate represented by the following formula (I), in the case of oleic acid, or ethylene glycol dilinolate, in the case of linoleic acid. Ethylene glycol dioleate represented by the following formula (I) is preferred.

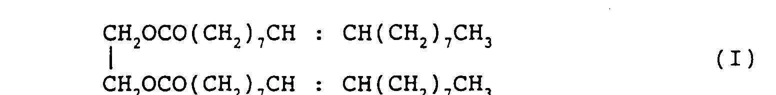

Each of the diesters used in the present invention comprising ethylene glycol and oleic, linoleic or stearic acid has a low viscosity in itself, and blending them into the rubber composition results in reducing the viscosity of the blended composition and elevating the fluidity thereof. Further, since they each have a hydrophilic group (ester group) and a lipophilic group (fatty chain) in the molecule, the hydrophilic group is adsorbed on the surface of the reinforcing agent and the lipophilic group is dissolved into the rubber, so that interaction between the reinforcing agent and the rubber is reduced to improve the processability of the rubber composition and the reinforcing agent is well dispersed to exhibit the improved low heat generating property. In particular, it has been found that the particular diester has the best balance between the hydrophilic group and the lipophilic group as compared with those of other esters, and it has been confirmed that the rubber composition blended with it is most improved in processability and has an excellent low heat generating property.

The blend amount of the diester is 1 to 10 parts by weight per 100 parts by weight of the vulcanizable rubber described above.

Further, the rubber composition of the present invention can suitably be blended, if necessary, with other compounding agents for rubber, such as sulfur, a vulcanization accelerator and process oil. The blend ratio thereof may be the same as in conventional rubber compositions.

The rubber composition of the present invention is most suitably applied to hard rubber for a tire such as belt coating rubber, gum chafer rubber, bead filler rubber and tread rubber.

Next, the present invention shall be explained with reference to examples and comparative examples, but the present invention shall not be restricted to these examples.

In the following examples and comparative examples, there were evaluated the non-vulcanization characteristics by Mooney viscosity, the vulcanization characteristics by tensile strength (Tb), and heat generating property by resilience. The adhesive property between a steel cord and rubber was evaluated with the pull-out strength converted into an index, which is obtained by carrying out a steel cord peel off test. In the examples, the vulcanization was carried out at 145°C for 30 minutes.

### (1) Mooney viscosity

The Mooney viscosity (ML₁₊₄ 130°C) was measured based on JIS K6300, and it is shown that the lower the value, the better the processability in a non-vulcanized state.

### (2) Heat generating property (resilience)

The resilience was measured at room temperature based on JIS K6301 impact resilience test. It is shown that the higher the value, the better the resilience.

### (3) Strength

The strength was measured at room temperature based on JIS K6301 tensile test. It is shown that the higher the value, the better the strength.

### (4) Adhesive property

A steel cord is put into a non-vulcanized rubber composition which is then vulcanized at 145°C for 45 minutes. After that, the rubber composition is degraded in a constant temperature bath for 7 days.

The adhesive property between steel and rubber was determined by measuring peel-off strength between the steel cord and the rubber in the vulcanized rubber composition with peeling off a steel cord. The value was shown by an index in which the value of Comparative Example 1 was set at 100. It is shown that the higher the value, the better the adhesive property.

### (5) Bleed

A non-vulcanized rubber composition was shaped into a sheet and left standing at room temperature for two weeks, and then was observed with the naked eye.

### Examples 1 to 3 and Comparative Examples 1 to 5

The compositions having the components (weight parts) shown the following Table 1 were kneaded by means of a closed type kneader to prepare rubber compositions. In the examples, ethylene glycol dioleate represented by the preceding formula (I) was used for the diester comprising ethylene glycol and oleic acid, which was a processing aid. In the comparative examples, processing aids were not used (Comparative example 1), or monooleic esters of diols, diethylene glycol dioleate and the like were used.

The evaluation results thereof are shown in the following Table 1.

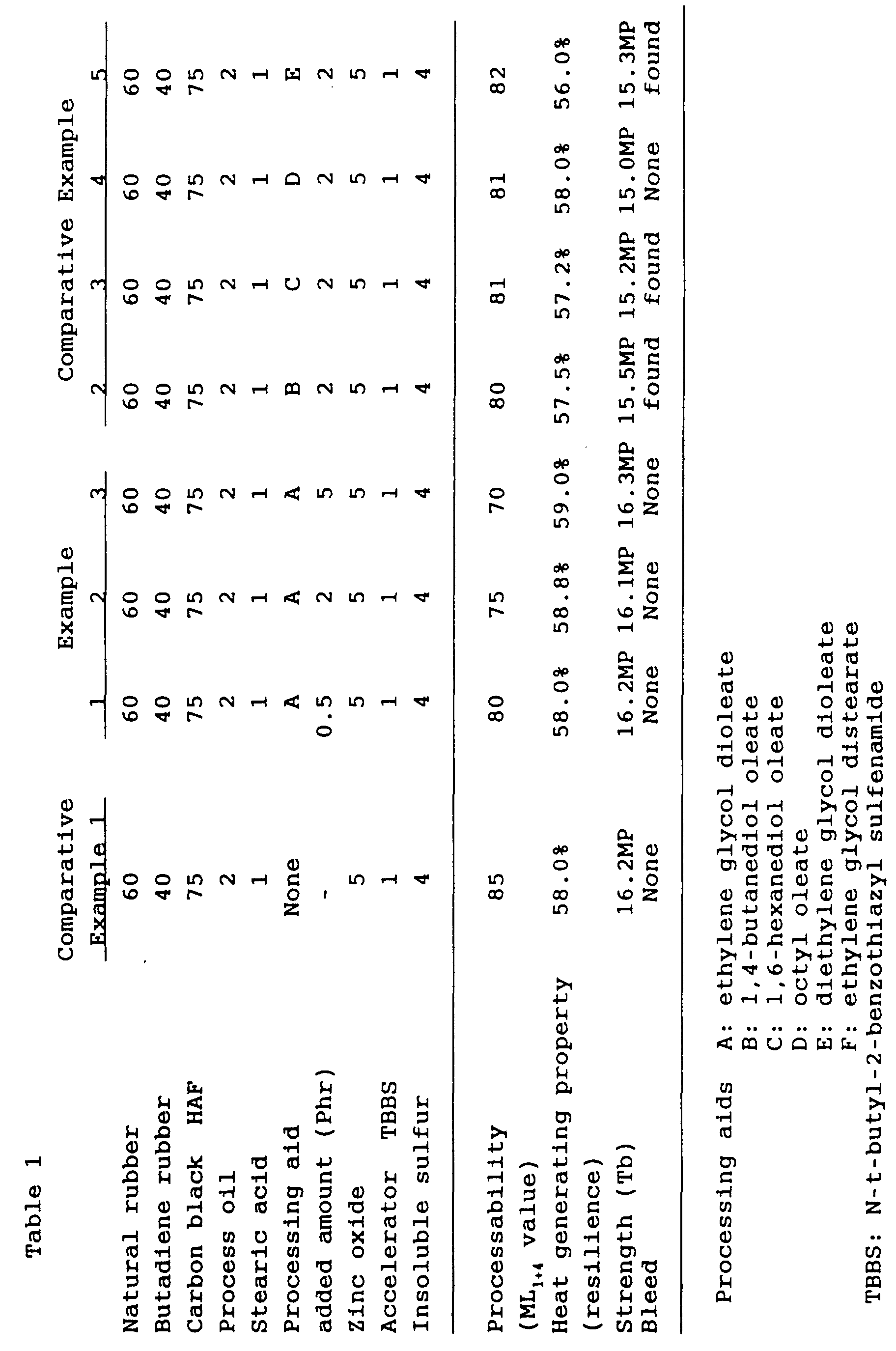

### Examples 4 to 6 and Comparative Examples 6 to 8

The compositions having the components (weight parts) shown the following Table 2 were kneaded by means of a closed type kneader to prepare rubber compositions. In the examples, esters based on oleic acid and stearic acid were used for the diester comprising ethylene glycol and an acid, which was a processing aid. In the comparative examples, octyl oleate and diethylene glycol dioleate were used.

The evaluation results thereof are shown in the following Table 2.

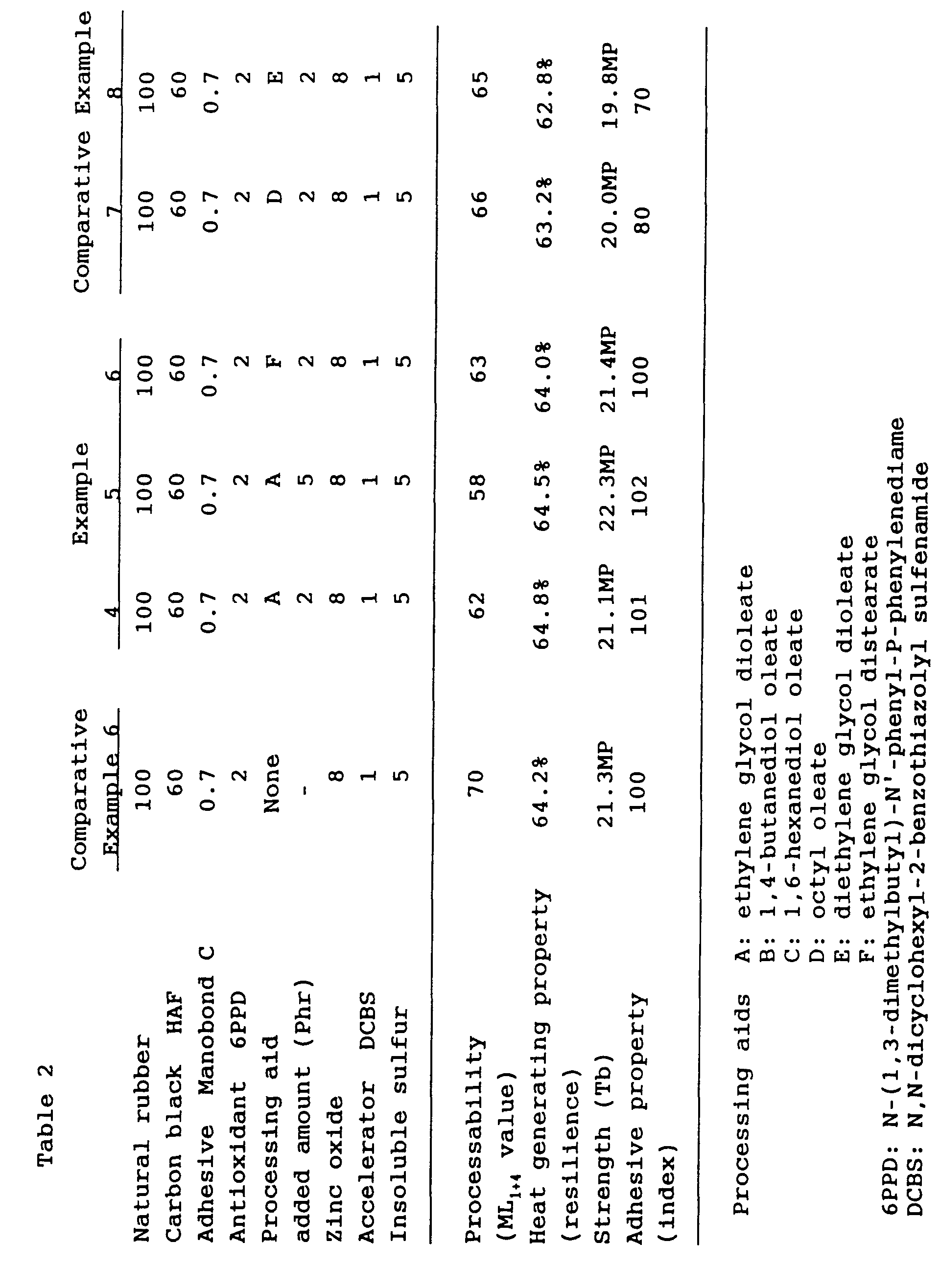

As apparent from the results shown in Tables 1 and 2 described above, it has been confirmed that the rubber compositions prepared in Examples 1 to 6 of the present invention have markedly improved processability in a non-vulcanized state and have good low heat generating property without reducing the mechanical property (Tb) after vulcanization and that they have good adhesion with vulcanization.

In contrast with this, the rubber compositions prepared in Comparative Examples 1 and 6 are not blended with diesters of oleic, linoleic and stearic acids, which are the processing aids, and they have inferior processability. It is clear that the rubber compositions prepared in Comparative Examples 2 to 5 have reduced mechanical properties and inferior processability. Further, it is confirmed that the rubber compositions prepared in Comparative Examples 7 to 8 have reduced adhesive property to a large extent. All those processing aids used in the comparative examples are known and disclosed in Japanese Patent Laid-Open No. Sho 59-122532.

## Claims

1. A rubber composition improved in processability comprising the following components (A) to (C):
| | | |
|---|---|---|
| (A) | at least one vulcanisable rubber | 100 parts by weight |
| (B) | a reinforcing agent | 20 to 120 parts by weight |
| (C) | a diester comprising ethylene glycol | 1 to 10 parts by weight |
and oleic acid or linoleic acid or stearic acid.

2. A rubber composition according to claim 1, wherein the diester (C) comprises ethylene glycol and oleic acid.

3. A rubber composition according to claim 1 or claim 2, wherein the vulcanisable rubber (A) comprises 50 parts by weight or more of natural rubber; wherein the reinforcing agent (B) comprises 50 parts by weight or more of carbon black; and wherein the rubber composition further comprises 10 parts by weight or less of a process oil.

## Patentansprüche

1. Gummizusammensetzung mit verbesserter Verarbeitbarkeit, aufweisend die folgenden Komponenten (A) bis (C):
| | | |
|---|---|---|
| (A) | mindestens einen vulkanisierbaren Gummi | 100 Gewichtsteile |
| (B) | ein Verstärkungsmittel | 20 bis 120 Gewichtsteile |
| (C) | einen Diester, der Ethylenglykol und Ölsäure | 1 bis 10 Gewichtsteile |
oder Linolsäure oder Stearinsäure aufweist.

2. Gummizusammensetzung gemäß Anspruch 1, wobei der Diester (C) Ethylenglykol und Ölsäure aufweist.

3. Gummizusammensetzung gemäß Anspruch 1 oder Anspruch 2, wobei der vulkanisierbare Gummi (A) 50 Gewichtsteile oder mehr natürlichen Gummi aufweist; wobei das Verstärkungsmittel (B) 50 Gewichtsteile oder mehr Ruß aufweist; und wobei die Gummizusammensetzung weiterhin 10 Gewichtsteile oder weniger eines Weichmacheröls aufweist.

## Revendications

1. Composition de caoutchouc présentant une aptitude au traitement améliorée, comprenant les composants (A) à (C) ci-dessous:
| | | |
|---|---|---|
| (A) | au moins un caoutchouc vulcanisable | 100 parties en poids |
| (B) | un agent de renforcement | 20 à 120 parties en poids |
| (C) | un diester comprenant | 1 à 10 parties en poids |
d'éthylène glycol et d'acide oléique,
d'acide linoléique ou d'acide stéarique.

2. Composition de caoutchouc selon la revendication 1, dans laquelle le diester (C) comprend de l'éthylène glycol et de l'acide oléique.

3. Composition de caoutchouc selon les revendications 1 ou 2, dans laquelle le caoutchouc vulcanisable (A) comprend 50 parties en poids ou plus de caoutchouc naturel; l'agent de renforcement (B) comprenant 50 parties en poids ou plus de noir de carbone; et la composition de caoutchouc comprenant en outre 10 parties en poids ou moins d'une huile de mise en oeuvre.
